# EUROPEAN PATENT SPECIFICATION

(11) **EP 4 539 518 B1**
(45) Date of publication and mention of the grant of the patent: **15.07.2026**
(21) Application number: 24204447.7
(22) Date of filing: 03.10.2024
(51) Int. Cl.: H04W 4/90, H04W 48/02, H04W 76/50, H04W 48/06, H04W 48/12

(54) **HANDLING EMERGENCY ACCESS**
HANDHABUNG VON NOTZUGANG
GESTION D'ACCÈS D'URGENCE

(30) Priority: 11.10.2023 US 202363589491 P
(43) Date of publication of application: 16.04.2025
(73) Proprietor: Nokia Technologies Oy, 02610 Espoo (FI)
(72) Inventor: KOSKINEN, Jussi-Pekka, Oulu (FI); TURTINEN, Samuli Heikki, Ii (FI); KOSKELA, Jarkko Tuomo, Oulu (FI)
(74) Representative: Nokia EPO representatives

(56) References cited:
- WO-A1-2025/078432
- US-A1- 2015 126 147
- "3rd Generation Partnership Project; Technical Specification Group Radio Access Network; Study on further NR RedCap UE complexity reduction (Release 18)", no. V18.0.0, 23 September 2022 (2022-09-23), pages 1 - 52, XP052211145, Retrieved from the Internet <URL:https://ftp.3gpp.org/Specs/archive/38_series/38.865/38865-i00.zip 38865-i00.docx> [retrieved on 20220923]

## Description

### FIELDS

Various example embodiments of the present disclosure generally relate to the field of telecommunication and in particular, to methods, devices, apparatuses and computer readable storage medium for handling emergency access.

### BACKGROUND

Radio access network (RAN) of the 3rd generation partnership project (3GPP) has agreed a work item on the enhanced support of reduced capability new radio (NR) devices with certain justification and objectives. For example, one of the fifth generation (5G) aims is to accelerate industrial transformation and digitalization, which may improve flexibility, enhance productivity and efficiency, reduce maintenance, and improve operational safety. Industrial sensors play an important role for realizing such a vision. Not only widely used in industrial automation and digitalization use cases, but industrial sensors are also widely used in the general environmental monitoring use cases such as monitoring of critical infrastructure (e.g., buildings, bridges, water dams, etc.) or monitoring for natural disasters (e.g., wildfire, flood, tsunami, earthquake, and so on).

US 2015/126147 discloses methods and apparatus, including computer program products, for control of service. In one aspect there is provided a method. The method may include receiving, at an application client at the user equipment, access control information, wherein the access control information indicates whether access to a network is allowed; and determining, at the application client, whether to allow a call attempt by the user equipment based on at least the received access control information. Related apparatus, systems, methods, and articles are also described.

A 3GPP Technical Report 38.865 "3rd Generation Partnership Project; Technical Specification Group Radio Access Network; Study on further NR RedCap UE complexity reduction (Release 18)", no. V18.0.0 23 September 2022, pages 1-52 captures findings from a 3GPP study item that concerns potential solutions for reducing UE complexity further compared with RedCap devices of Release 17. The study focuses on UE bandwidth reduction and/or UE peak rate reduction.

### SUMMARY

The invention is defined by the independent claims. Embodiments are defined in the dependent claims.

In a first aspect of the present disclosure, there is provided a first apparatus. The first apparatus comprises at least one processor; and at least one memory storing instructions that, when executed by the at least one processor, cause the first apparatus at least to: in accordance with a determination that an access to a cell by the first apparatus is barred, monitor an indication related to an emergency access in the cell; determine, based on a result of the monitoring, whether the first apparatus is allowed to perform emergency access in the cell.

In a second aspect of the present disclosure, there is provided a second apparatus. The second apparatus comprises at least one processor; and at least one memory storing instructions that, when executed by the at least one processor, cause the second apparatus at least to: transmit an indication related to an emergency access in a cell, the indication indicating whether a first apparatus is allowed to perform the emergency access in the cell, wherein an access to the cell by the first apparatus is barred.

In a third aspect of the present disclosure, there is provided a method. The method comprises: in accordance with a determination that an access to a cell by the first apparatus is barred, monitoring an indication related to an emergency access in the cell; determining, based on a result of the monitoring, whether the first apparatus is allowed to perform emergency access in the cell.

In a fourth aspect of the present disclosure, there is provided a method. The method comprises: transmitting an indication related to an emergency access in a cell, the indication indicating whether a first apparatus is allowed to perform the emergency access in the cell, wherein an access to the cell by the first apparatus is barred.

In a fifth aspect of the present disclosure, there is provided a first apparatus. The first apparatus comprises means for in accordance with a determination that an access to a cell by the first apparatus is barred, monitoring an indication related to an emergency access in the cell; means for determining, based on a result of the monitoring, whether the first apparatus is allowed to perform emergency access in the cell.

In a sixth aspect of the present disclosure, there is provided a second apparatus. The second apparatus comprises means for transmitting an indication related to an emergency access in a cell, the indication indicating whether a first apparatus is allowed to perform the emergency access in the cell, wherein an access to the cell by the first apparatus is barred.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart of communication according to some example embodiments of the present disclosure;
FIG. 3 illustrates a flowchart of a method implemented at a first device according to some example embodiments of the present disclosure;
FIG. 4 illustrates a flowchart of a method implemented at a second device according to some example embodiments of the present disclosure;
FIG. 5 illustrates a simplified block diagram of a device that is suitable for implementing example embodiments of the present disclosure; and
FIG. 6 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like.

As discussed above, RAN of 3GPP has agreed a work item on the enhanced support of reduced capability NR devices with certain justification and objectives. Example justification and objectives are discussed as below.

One of the 5G aims is to accelerate industrial transformation and digitalization, which may improve flexibility, enhance productivity and efficiency, reduce maintenance, and improve operational safety. Industrial sensors play an important role for realizing such a vision. Not only widely used in industrial automation and digitalization use cases, but industrial sensors are also widely used in the general environmental monitoring use cases such as monitoring of critical infrastructure (e.g., buildings, bridges, water dams, etc.) or monitoring for natural disasters (e.g., wildfire, flood, tsunami, earthquake, and so on).

Another emerging new class of new 5G use cases is the smart city vertical, which covers data collection and processing to more efficiently monitor and control city resources, and to provide services to city residents. Especially, the deployment of surveillance cameras is an essential part of the smart city but also of factories and industries.

Furthermore, there have been increasing interests in wearables use cases such as smart watches, eHealth related devices, and medical monitoring devices. These use cases call for different design considerations and have different requirements in terms of form factor, UE complexity and energy efficiency, compared to enhanced mobile broadband (eMBB) devices.

The support of industrial sensors, video surveillance, and wearables were the motivations behind release 17 (Rel-17) RedCap. Through the Rel-17 NR RedCap work item, 3GPP has established a framework for enabling reduced capability NR devices suitable for a range of use cases, including the industrial sensors, video surveillance, and wearables use cases, with requirements on low UE complexity and sometimes also on low UE power consumption.

To further expand the market for RedCap use cases with relatively low cost, low energy consumption, and low data rate requirements, e.g., industrial wireless sensor network use cases, some further complexity reduction enhancements should be considered.

Release 18 (Rel-18) RedCap should provide NR support for low-tier devices between existing low-power wide-area (LPWA, also referred to as low-power network (LPN) or low-power wide-area network (LPWAN) sometimes) UEs and the capabilities of Rel-17 RedCap UEs. The supported peak data rate for Rel-18 RedCap targets to 10Mbps. Rel-18 RedCap should not overlap with existing LPWA solutions.

The enhancements should be introduced while maintaining the integrity of the RedCap ecosystem and maximizing the benefit of economies of scale. The work item targets enhancements applicable to the RedCap framework defined in Rel-17, including principles of network awareness of device capabilities.

Techniques for further UE complexity reduction have been studied in the study item documented in 3GPP standards with a number of TR 38.865.

The objective is to specify support for the enhancements as discussed below.

One enhancement is about power saving and/or energy efficiency enhancements, For example, enhanced extended discontinuous reception (eDRX) in RRC_INACTIVE (>10.24s). Another enhancement is about complexity and/or cost reduction, for example, further reduced UE complexity in frequency range 1 (FR1), including but not limited to:
● UE baseband (BB) bandwidth reduction;
   ➢ 5 MHz BB bandwidth only for physical downlink shared channel (PDSCH) (for both unicast and broadcast) and PUSCH, with 20 MHz radio frequency (RF) bandwidth for uplink (UL) and downlink (DL);
   ➢ The other physical channels and signals are still allowed to use a band width part (BWP) up to the 20 MHz maximum UE RF and BB bandwidth;
   ➢ Support additional separate early indication(s);
● UE peak data rate reduction;
   ➢ Relaxation of the constraint (*vLayers·Qm·f* ≥ 4) for peak data rate reduction;
   ➢ The relaxed constraint is, e.g., 1 (instead of 4);
   ➢ The parameters *(vLayers, Qm, f*) can be as in Rel-17 RedCap;
● Both 15 kHz subcarrier spacing (SCS) and 30 kHz SCS are supported;
● Aim to define at most one Rel-18 RedCap UE type for further UE complexity reduction;
● The existing UE capability framework is used, and changes to capability signalling are specified only if necessary. By default, all UE capabilities applicable to a Rel-17 RedCap UE are applicable unless otherwise specified.

It is noted that the work defined as part of this work item is not to overlap with LPWA use cases and the coexistence with non-RedCap UEs and Rel-17 RedCap UEs is expected to be ensured. Further, the work item considers all applicable duplex modes unless otherwise specified.

Whether UE peak data rate reduction for UE may be limited only with UE BB bandwidth reduction or standalone needs further discussions.

In addition, RAN has agreed a work item on network energy savings for NR with the certain justification and objectives. Example justification and objectives are discussed as below.

Network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g., extended reality, XR), networks are being denser, use more antennas, larger bandwidths and more frequency bands. The environmental impact of 5G needs to stay under control, and novel solutions to improve network energy savings need to be developed.

Energy consumption has become a key part of the operating expense (OPEX) of the operators. According to the report from global system for mobile communications association (GSMA), the energy cost on mobile networks accounts for ~23% of the total operator cost. Most of the energy consumption comes from the radio access network and in particular from the active antenna unit (AAU), with data centres and fibre transport accounting for a smaller share. The power consumption of a radio access can be split into two parts: the dynamic part which is only consumed when data transmission/reception is ongoing, and the static part which is consumed all the time to maintain the necessary operation of the radio access devices, even when the data transmission/reception is not on-going.

Further, the network energy consumption model for the base station (BS) was defined including the reference configurations for FR1 time-division duplex (TDD)/ frequency-division duplex (FDD) and FR2, the deep/light/micro sleep power states with corresponding relative power, transition time and energy consumption among different power states based on two types of BS categories, and the scaling rules for the active DL/UL power states considering BS power split by a static part of power and a dynamic part of power with the latter part reflecting the dynamic power consumption with respect to transmission/reception resource configurations in time, frequency, spatial and power domains. In addition, evaluation methodology and assumptions were achieved to study and evaluate the network energy saving gains for potential techniques with respect to other key performance indicator (KPI) including universal personal telecommunication (UPT), access delay, UE power consumption, etc.

Based on the agreed BS energy consumption model, and the evaluation methodology and assumptions, potential network energy saving techniques in various domains were evaluated with respect to the energy saving gains and the corresponding performance impact considering the above KPIs. The studied techniques are classified into time, frequency, spatial and power domains. The techniques in time and frequency domains mainly aim to reduce the power consumption for dynamic part by trying to shut down more symbols on one or more carriers to achieve BS micro sleep, and even the static power part by enlarging the interval between the contiguous active transmission/reception occasions to achieve BS light/deep sleep. The techniques in spatial and power domains mainly aim to reduce the power consumption of the transceivers (TRX) chains and power amplifiers (PAs) by trying to shut down more spatial elements and/or reduce transmission power/power spectrum density, or increase the PA efficiency. Some of the studied techniques are beneficial for network energy savings.

Example objectives of study item or core part work item or testing part work item are discussed as below. Specifically, the objectives of the work item are discussed first.

Specify synchronization signal and physical broadcast channel (PBCH) block (SSB)-less secondary cell (SCell) operation for inter-band carrier aggregation (CA) for FR1 and co-located cells, if found feasible by RAN4 study, where a UE measures SSB transmitted on primary cell (PCell) or another SCell for an SCell's time/frequency synchronization (including downlink automatic gain control, AGC), and layer 1 (L1)/layer 3 (L3) measurements, including potential enhancement on SCell activation procedures if necessary.

Specify enhancement on cell DTX/DRX mechanism including the alignment of cell discontinuous transmission (DTX)/discontinuous reception (DRX) and UE DRX in RRC_CONNECTED mode, and inter-node information exchange on cell DTX/DRX.

It is noted that no change for SSB transmission due to cell DTX/DRX and the impact to IDLE/INACTIVE UEs due to the above enhancement should be avoided.

Specify the following techniques in spatial and power domains: specify necessary enhancements on CSI and beam management related procedures including measurement and report, and signaling to enable efficient adaptation of spatial elements (e.g., antenna ports, active transceiver chains), and specify necessary enhancements on CSI related procedures including measurement and report, and signaling to enable efficient adaptation of power offset values between PDSCH and CSI-RS.

It is noted that the above objectives are only for UE specific channels/signals and legacy UE channel state information (CSI)/CSI-reference signal (CSI-RS) capabilities may apply when considering total number of CSI reports and requirements.

Specify mechanism(s) to prevent legacy UEs camping on cells adopting the Rel-18 network energy saving (NES) techniques, if necessary. Specify conditional handover (CHO) procedure enhancement(s) in case source/target cell is in NES mode. Specify inter-node beam activation and enhancements on restricting paging in a limited area. Specify the corresponding radio resource management (RRM)/RF core requirements, if necessary.

It has been proposed that a RedCap UE (that provides voice services) that has considered the RedCap supporting NR cell as barred due to not being able to support the system information block 1 (SIB1) broadcasted 1Rx (i.e., 1 receiving (Rx) branch)/2Rx (i.e., 2 Rx branches) requirement (from the information elements (IEs) *cellBarredRedCap1Rx-r17* and *cellBarredRedCap2Rx-r17),* is allowed to consider this NR cell as an acceptable cell for the purpose of placing an emergency call.

However, this is only in the case where the RedCap UE supports all the capabilities based on SIB1 except for the 1Rx/2Rx requirement. Further, the UE is not able to perform emergency call when access is barred for 1Rx/2Rx/NES/non-NES device. Specifically, the network is not able to bar 1Rx or 2Rx devices separately as was intended by the Rel-17 design since the emergency call would always be allowed, and thus the only option would be to bar RedCap devices completely which does not serve the purpose of separate barring.

According to the present disclosure, a solution for handling emergency call is proposed. In the solution, in accordance with a determination that an access to a cell by the first apparatus is barred, monitor an indication related to an emergency access in the cell; determine, based on a result of the monitoring, whether the first apparatus is allowed to perform emergency access in the cell. In an embodiment, this determination is followed by an action consequent to the determination, e.g. one of the following: enabling/performing the emergency access in the cell, or disabling/preventing the emergency access in the cell.

In this way, the related devices may attempt emergency call although access for such devices is barred in the system information, the network device may allow or disallow emergency call for the related devices regardless of other access barring for such devices, and the network device may bar access for certain device type completely (e.g., in case no inter-operability developmental testing (IODT) testing have been performed with the device type).

In the present disclosure, terms of "emergency access" and "emergency call" may be used interchangeably. System specifications may logically distinguish the emergency access and emergency call from a regular access or call in a cell.

In the present disclosure, term "NES device" refers to a device supports a scenario where a cell is operated in a NES mode. In some example embodiments, a NES device may at least support cell DTX/DRX. A NES device also may be referred to as "a NES-capable device".

In the present disclosure, term "non-NES device" refers to a device does not support a scenario where a cell is operated in a NES mode. In some example embodiments, a non-NES device may not support cell DTX/DRX.

Principles and implementations of the present disclosure will be described in detail below with reference to the figures.

It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### Example Environment

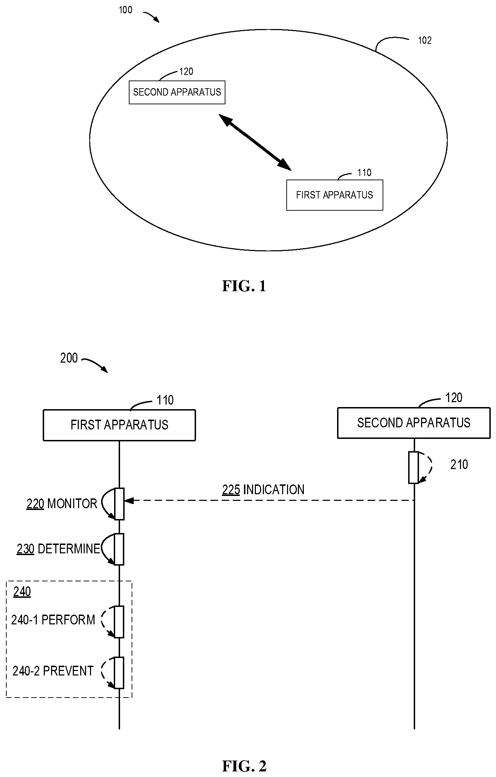

FIG. 1 illustrates an example communication environment 100 in which example embodiments of the present disclosure can be implemented. The communication environment 100 includes a first apparatus 110 and a second apparatus 120. A serving area provided by the second apparatus 120 is called a cell. The second apparatus 120 can provide one or more cells, for example, a cell 102 as illustrated in FIG. 1.

In some example embodiments, the first apparatus 110 may be comprised in a terminal device and the second apparatus 120 may be comprised in a network device serving the terminal apparatus.

In the following, for the purpose of illustration, some example embodiments are described with the first apparatus 110 operating as a terminal apparatus and the second apparatus 120 operating as a network apparatus. However, in some example embodiments, operations described in connection with a terminal apparatus may be implemented at a network apparatus or other apparatus, and operations described in connection with a network apparatus may be implemented at a terminal apparatus or other apparatus.

In some example embodiments, if the first apparatus 110 is a terminal apparatus and the second apparatus 120 is a network apparatus, a link from the second apparatus 120 to the first apparatus 110 is referred to as a downlink (DL), while a link from the first apparatus 110 to the second apparatus 120 is referred to as an uplink (UL). In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is a RX apparatus (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

### Work Principle and Example Signaling for Communication

Reference is made to FIG. 2, which illustrates a signaling flow 200 of communication in accordance with some embodiments of the present disclosure. For the purposes of discussion, the signaling flow 200 will be discussed with reference to FIG. 1, for example, by using the first apparatus 110 and the second apparatus 120.

It is to be understood that the operations at the first apparatus 110 and the second apparatus 120 should be coordinated. In other words, the second apparatus 120 and the first apparatus 110 should have common understanding about configurations, parameters and so on. Such common understanding may be implemented by any suitable interactions between the second apparatus 120 and the first apparatus 110 or both the second apparatus 120 and the first apparatus 110 applying the same rule/policy.

In the following, although some operations are described from a perspective of the first apparatus 110, it is to be understood that the corresponding operations should be performed by the second apparatus 120. Similarly, although some operations are described from a perspective of the second apparatus 120, it is to be understood that the corresponding operations should be performed by the first apparatus 110. Merely for brevity, some of the same or similar contents are omitted here.

The present disclosure focuses on network awareness on the UEs sleep state.

In the example of FIG. 2, the first apparatus 110 may be a terminal apparatus and the second apparatus 120 may be a network apparatus.

Additionally, the first apparatus 110 may comprise at least one of the following: a device with 1 receiving (Rx) branch, a device with 2 Rx branches, a bit rate reduced device, a bandwidth (BW) reduced device, or a non-NES device. The bit rate reduced device may mean that the bit rate of the first apparatus is limited in the system specifications from a maximum bit rate the system offers to devices not having such a limitation. RedCap devices are examples of such devices.

In operation, the first apparatus 110 determines that an access to a cell by the first apparatus 110 is barred, and monitor 220 an indication related to an emergency access in the cell. Then, the first apparatus 110 determines 230 whether the first apparatus 110 is allowed to perform emergency access in the cell based on a result of the monitoring.

Additionally, in some example embodiments, the first apparatus 110 may perform 240 a corresponding operation based on the determining. Specifically, in some example embodiments, the first apparatus 110 performs 240-1 the emergency access in the cell based on the determining. Alternatibely, in some example embodiments, the first apparatus 110 prevents the emergency access in the cell based on the determining.

In some example embodiments, in accordance with a determination that the indication related to the emergency access is received, the first apparatus 110 may determine whether the first apparatus 110 is allowed to perform emergency access in the cell based on the indication.

In some example embodiments, in accordance with a determination that no indication related to the emergency access is received, the first apparatus 110 may determine that the first apparatus 110 is allowed to perform the emergency access in the cell.

Alternatively, in some embodiments, in accordance with a determination that no indication related to the emergency access is received, the first apparatus 110 may determine that the first apparatus 110 is disallowed to perform the emergency access in the cell.

In some example embodiments, the indication may be comprised in at least one of:
● system information which is broadcasted from a second apparatus 120,
● an indicator related to the emergency access which is transmitted from the second apparatus 120, or
● an indication specific for the first apparatus 110 which is transmitted from the second apparatus 120.

In some example embodiments, the indication may indicate that an emergency access is allowed, disallowed or barred for one or more of the following devices:
● a device with 1 receiving (Rx) branch,
● a device with 2 Rx branches,
● a bit rate reduced device,
● a bandwidth (BW) reduced device, or
● a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

If the first apparatus 110 is or comprises one of such devices and further detects one of the indications indicating that the emergency access is allowed particularly for said one of such devices, the first apparatus 110 may proceed with the emergency access. On the other hand, if the emergency access is barred/disallowed particularly for said one of such devices, the first apparatus 110 may seek another cell for the emergency access. In other words, the first apparatus 110 may disable the emergency access in the cell.

In some example embodiments, in accordance with a determination that the first apparatus 110 is allowed to perform the emergency access in the cell, the first apparatus 110 may perform at least one of the following: determining the cell to be an acceptable cell, receiving system information on the cell, or storing information about the cell for cell selection.

In some example embodiments, the presence of the indication depends on information that the cell is inaccessible to the first apparatus 110.

In some example embodiments, in accordance with a determination that the first apparatus 110 is to initiate an emergency access, the first apparatus 110 may select a target cell for the emergency access from at least one candidate cell, where each of the at least one candidate cell is either accessible to the first apparatus 110 or inaccessible to the first apparatus 110.

In some example embodiments, the first apparatus 110 may be barred from making a non-emergency access the cell based on the device type of the first apparatus 110. Additionally, in some example embodiments, the first apparatus 110 is barred from making a non-emergency access the cell in case that first apparatus 110 comprises at least one of: a device with 1 receiving (Rx) branch, a device with 2 Rx branches, a bit rate reduced device, a bandwidth (BW) reduced device, or a non-NES device.

The above discussions are mainly described in a perspective of the first apparatus 110. In the following, more example processes are described in a perspective of the second apparatus 120.

In operation, the second apparatus 120 may transmit 225 an indication related to an emergency access in a cell, where the indication indicates whether a first apparatus 110 is allowed to perform the emergency access in the cell, wherein an access to the cell by the first apparatus 110 is barred.

In some example embodiments, the second apparatus 120 may broadcast system information comprising the indication.

Alternatively, in some example embodiments, the second apparatus 120 may transmit an indicator related to the emergency access to the first apparatus 110.

Alternatively, in some example embodiments, the second apparatus 120 may transmit an indication specific for the first apparatus 110 to the first apparatus 110.

In some example embodiments, the second apparatus 120 may determine 210 whether to transmit the indication based on information that the cell is inaccessible to the first apparatus 110.

In some example embodiments, the indication may indicate that an emergency access is allowed, disallowed or barred for one or more of the following devices:
● a device with 1 receiving (Rx) branch,
● a device with 2 Rx branches,
● a bit rate reduced device,
● a bandwidth (BW) reduced device, or
● a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

With the above example processes, the devices (such as, 1Rx/2Rx/NES devices) may attempt emergency call although access for such devices is barred in the system information, the network device may allow or disallow emergency call for devices (such as, 1Rx/2Rx/NES devices) regardless of other access barring for such devices, and/or the network device may bar access for certain device type completely (e.g., in case no inter-operability developmental testing (IODT) testing have been performed with the device type).

Merely for a better understanding about the above processes, some example embodiments are discussed as below.

In some example embodiments, the general policy is to allow/disallow emergency call for device(s) (such as, 1Rx/2Rx/bit rate reduced/BW reduced device or non-NES device) in a NES cell regardless of the access barring for such devices.

In some example embodiments, the network device may broadcast in system information whether emergency access is allowed or disallowed for device(s) (such as, 1Rx/2Rx/bit rate reduced/BW reduced device or non-NES device) in a NES cell regardless of whether access for such devices is barred or not. In one example one or more bits are introduced in the system information for this.

In some example embodiments, the network device may indicate with single indicator that emergency call is allowed or not allowed for device(s) (such as, 1Rx/2Rx/bit rate reduced/BW reduced device or non-NES device) in a NES cell (or subset of these devices or one of these devices).

In some example embodiments, the network device may indicate with individual indication (per device type i.e., device(s) in a NES cell, such as, 1Rx/2Rx/bit rate reduced/BW reduced device or non-NES device in a NES cell) whether emergency access is allowed or disallowed.

In some example embodiments, emergency access is allowed or disallowed for device(s) (such as, 1Rx/2Rx/bit rate reduced/BW reduced device or non-NES device) in a NES cell if nothing related to emergency access for such devices is broadcasted (e.g., as per above).

In some example embodiments, the device(s) (such as, 1Rx/2Rx/bit rate reduced/BW reduced device or non-NES device) in a NES cell may consider the cell as acceptable cell (e.g., in the cell selection) even though the cell is barred in case the emergency access is allowed by the network device.

In some example embodiments, a non-NES device attempts to receive/decode SIB1 on a cell even though the cell is set as barred in case the non-NES device is attempting an emergency call.

In some example embodiments, the UE may store the information about the cells allowing emergency access while performing cell selection. In some example embodiments, this is done only in case the access for the device is barred in the cell.

In some example embodiments, the presence of the network indication(s) on whether the emergency access is allowed/disallowed in the cell is dependent on whether the access for the 1Rx/2Rx/bit rate reduced/BW reduced device or non-NES device in a NES cell is barred.

In some example embodiments, when UE starts emergency call it will lift any ongoing barring it may have and check if any cell it can find e.g., via cell selection could provide emergency services.

In this way, the devices (such as, 1Rx/2Rx/NES devices) may attempt emergency call although access for such devices is barred in the system information, the network device may allow or disallow emergency call for devices (such as, 1Rx/2Rx/NES devices) regardless of other access barring for such devices, and the network device may bar access for certain device type completely (e.g., in case no inter-operability developmental testing (IODT) testing have been performed with the device type).

### Example Methods

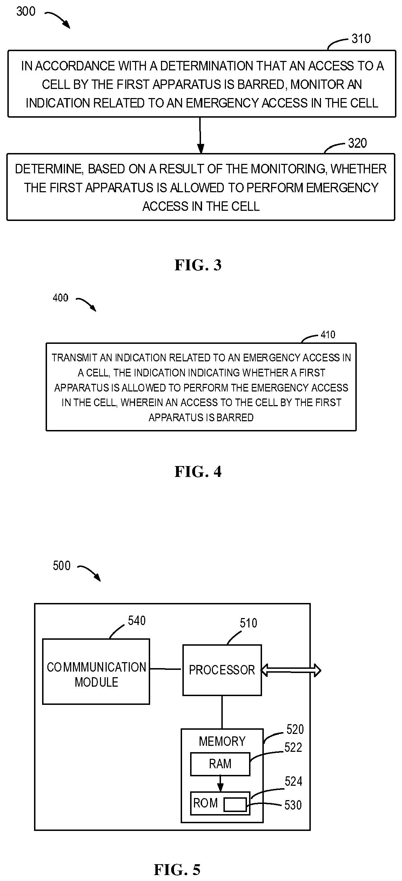

FIG. 3 shows a flowchart of an example method 300 implemented at a first apparatus in accordance with some example embodiments of the present disclosure. For the purpose of discussion, the method 300 will be described from the perspective of the first apparatus 110 in FIG. 1.

At block 310, in accordance with a determination that an access to a cell by the first apparatus is barred, the first apparatus monitors an indication related to an emergency access in the cell.

At block 320, the first apparatus determines, based on a result of the monitoring, whether the first apparatus is allowed to perform emergency access in the cell.

In some example embodiments, the first apparatus may perform one of the following based on the determining: performing the emergency access in the cell, or preventing the emergency access in the cell.

In some example embodiments, in accordance with a determination that the indication related to the emergency access is received, the first apparatus determines whether the first apparatus is allowed to perform emergency access in the cell based on the indication.

In some example embodiments, in accordance with a determination that no indication related to the emergency access is received, the first apparatus determines that the first apparatus is allowed to perform the emergency access in the cell; or in accordance with a determination that no indication related to the emergency access is received, the first apparatus determines that the first apparatus is disallowed to perform the emergency access in the cell.

In some example embodiments, the indication may be comprised in at least one of: system information which is broadcasted from a second apparatus, an indicator related to the emergency access which is transmitted from the second apparatus, or an indication specific for the first apparatus which is transmitted from the second apparatus.

In some example embodiments, in accordance with a determination that the first apparatus is allowed to perform the emergency access in the cell, the first apparatus may determine the cell to be an acceptable cell, receive system information on the cell, or store information about the cell for cell selection.

In some example embodiments, the presence of the indication may depend on information that the cell is inaccessible to the first apparatus.

In some example embodiments, in accordance with a determination that the first apparatus is to initiate an emergency access, the first apparatus may select a target cell for the emergency access from at least one candidate cell, wherein each of the at least one candidate cell is either accessible to the first apparatus or inaccessible to the first apparatus.

In some example embodiments, the first apparatus may be barred from making a non-emergency access the cell based on the first apparatus comprising at least one of: a device with 1 receiving (Rx) branch, a device with 2 Rx branches, a bit rate reduced device, a bandwidth (BW) reduced device, a non-NES device, or a NES device allowed to perform the emergency access in the cell.

In some example embodiments, the indication may indicate that an emergency access is allowed, disallowed or barred for one or more of the following devices: a device with 1 receiving (Rx) branch, a device with 2 Rx branches, a bit rate reduced device, a bandwidth (BW) reduced device, or a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

FIG. 4 shows a flowchart of an example method 400 implemented at a second apparatus in accordance with some example embodiments of the present disclosure. For the purpose of discussion, the method 400 will be described from the perspective of the second apparatus 120 in FIG. 1.

At block 410, the second apparatus transmits an indication related to an emergency access in a cell, the indication indicating whether a first apparatus is allowed to perform the emergency access in the cell, wherein an access to the cell by the first apparatus is barred.

In some example embodiments, the second apparatus may broadcast system information comprising the indication; transmit an indicator related to the emergency access to the first apparatus; or transmit an indication specific for the first apparatus to the first apparatus.

In some example embodiments, the second apparatus may determine whether to transmit the indication based on information that the cell is inaccessible to the first apparatus.

In some example embodiments, the first apparatus may comprise at least one of: a device with 1 receiving (Rx) branch, a device with 2 Rx branches, a bit rate reduced device, a bandwidth (BW) reduced device, a non-NES device, or a NES device allowed to perform the emergency access in the cell.

In some example embodiments, the indication may indicate that an emergency access is allowed, disallowed or barred for one or more of the following devices: a device with 1 receiving (Rx) branch, a device with 2 Rx branches, a bit rate reduced device, a bandwidth (BW) reduced device, or a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

### Example Apparatus, Device and Medium

In some example embodiments, a first apparatus capable of performing any of the method 300 (for example, the first apparatus 110 in FIG. 1 may comprise means for performing the respective operations of the method 300. The means may be implemented in any suitable form. For example, the means may be implemented in a circuitry or software module. The first apparatus may be implemented as or included in the first apparatus 110 in FIG. 1.

In some example embodiments, the first apparatus comprises means for in accordance with a determination that an access to a cell by the first apparatus is barred, monitoring an indication related to an emergency access in the cell; means for determining, based on a result of the monitoring, whether the first apparatus is allowed to perform emergency access in the cell; and means for performing one of the following based on the determining: performing the emergency access in the cell, or preventing the emergency access in the cell.

In some example embodiments, the first apparatus further comprises: means for in accordance with a determination that the indication related to the emergency access is received, determining whether the first apparatus is allowed to perform emergency access in the cell based on the indication.

In some example embodiments, the first apparatus further comprises: means for in accordance with a determination that no indication related to the emergency access is received, determining that the first apparatus is allowed to perform the emergency access in the cell; or means for in accordance with a determination that no indication related to the emergency access is received, determining that the first apparatus is disallowed to perform the emergency access in the cell.

In some example embodiments, the indication is comprised in at least one of: system information which is broadcasted from a second apparatus, an indicator related to the emergency access which is transmitted from the second apparatus, or an indication specific for the first apparatus which is transmitted from the second apparatus.

In some example embodiments, in accordance with a determination that the first apparatus is allowed to perform the emergency access in the cell, the first apparatus may further comprise: means for determining the cell to be an acceptable cell, means for receiving system information on the cell, or means for storing information about the cell for cell selection.

In some example embodiments, the presence of the indication may depend on information that the cell is inaccessible to the first apparatus.

In some example embodiments, the first apparatus may further comprise: means for in accordance with a determination that the first apparatus is to initiate an emergency access, selecting a target cell for the emergency access from at least one candidate cell, wherein each of the at least one candidate cell is either accessible to the first apparatus or inaccessible to the first apparatus.

In some example embodiments, the first apparatus may be barred from making a non-emergency access the cell based on the first apparatus comprising at least one of: a device with 1 receiving (Rx) branch, a device with 2 Rx branches, a bit rate reduced device, a bandwidth (BW) reduced device, or a non-NES device.

In some example embodiments, the indication may indicate that an emergency access is allowed, disallowed or barred for one or more of the following devices: a device with 1 receiving (Rx) branch, a device with 2 Rx branches, a bit rate reduced device, a bandwidth (BW) reduced device, or a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

In some example embodiments, the first apparatus further comprises means for performing other operations in some example embodiments of the method 300 or the first apparatus 110. In some example embodiments, the means comprises at least one processor; and at least one memory storing instructions that, when executed by the at least one processor, cause the performance of the first apparatus.

In some example embodiments, a second apparatus capable of performing any of the method 400 (for example, the second apparatus 120 in FIG. 1 may comprise means for performing the respective operations of the method 400. The means may be implemented in any suitable form. For example, the means may be implemented in a circuitry or software module. The second apparatus may be implemented as or included in the second apparatus 120 in FIG. 1.

In some example embodiments, the second apparatus comprises means for transmitting an indication related to an emergency access in a cell, the indication indicating whether a first apparatus is allowed to perform the emergency access in the cell, wherein an access to the cell by the first apparatus is barred.

In some example embodiments, the second apparatus may further comprise: means for broadcasting system information comprising the indication; means for transmitting an indicator related to the emergency access to the first apparatus; or means for transmitting an indication specific for the first apparatus to the first apparatus.

In some example embodiments, the second apparatus may further comprise: means for determining whether to transmit the indication based on information that the cell is inaccessible to the first apparatus.

In some example embodiments, the first apparatus may comprise at least one of: a device with 1 receiving (Rx) branch, a device with 2 Rx branches, a bit rate reduced device, a bandwidth (BW) reduced device, a non-NES device or a NES device allowed to perform the emergency access in the cell.

In some example embodiments, the indication may indicate that an emergency access is allowed, disallowed or barred for one or more of the following devices: a device with 1 receiving (Rx) branch, a device with 2 Rx branches, a bit rate reduced device, a bandwidth (BW) reduced device, or a non-NES device.

In some example embodiments, the indication may indicate that the emergency access is allowed/disallowed/barred for a device with 1 receiving (Rx) branch.

In some example embodiments, the indication may indicate that emergency access is allowed, disallowed or barred for a device with 2 Rx branches.

In some example embodiments, the indication may indicate that emergency access is allowed, disallowed or barred for a bit rate reduced device.

In some example embodiments, the indication may indicate that emergency access is allowed, disallowed or barred for a bandwidth (BW) reduced device.

In some example embodiments, the indication may indicate that emergency access is allowed/disallowed/barred for a non-NES device.

In some example embodiments, the second apparatus further comprises means for performing other operations in some example embodiments of the method 400 or the second apparatus 120. In some example embodiments, the means comprises at least one processor; and at least one memory storing instructions that, when executed by the at least one processor, cause the performance of the second apparatus.

FIG. 5 is a simplified block diagram of a device 500 that is suitable for implementing example embodiments of the present disclosure. The device 500 may be provided to implement a communication device, for example, the first apparatus 110 or the second apparatus 120 as shown in FIG. 1. As shown, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some example embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The instructions of the program 530 may include instructions for performing operations/acts of some example embodiments of the present disclosure. The program 530 may be stored in the memory, e.g., the ROM 524. The processor 510 may perform any suitable actions and processing by loading the program 530 into the RAM 522.

The example embodiments of the present disclosure may be implemented by means of the program 530 so that the device 500 may perform any process of the disclosure as discussed with reference to FIG. 2 to FIG. 4. The example embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

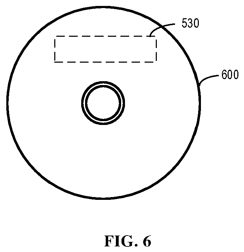

FIG. 6 shows an example of the computer readable medium 600 which may be in form of CD, DVD or other optical storage disk. The computer readable medium 600 has the program 530 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A user equipment (110) comprising:
at least one processor (510); and
at least one memory (520) storing instructions (530) that, when executed by the at least one processor, cause the user equipment at least to:
in accordance with a determination that an access to a cell by the user equipment is barred, monitor (220) an indication related to an emergency access in the cell, wherein the user equipment is barred from making a non-emergency access in the cell based on the user equipment being a release 17 RedCap user equipment with 1 receiving, Rx, branch or 2 Rx branches;
in accordance with a determination that the indication related to the emergency access is received and that the indication indicates that the emergency access is allowed, determine (230) whether the user equipment is allowed to perform emergency access in the cell;
in accordance with a determination that no indication related to the emergency access is received, determine that the user equipment is disallowed to perform the emergency access in the cell, and in accordance with a determination that the user equipment is to initiate an emergency access, select a target cell for the emergency access from at least one candidate cell, wherein each of the at least one candidate cell is accessible to the user equipment.

2. The user equipment of claim 1, wherein the indication is comprised in system information which is broadcasted from a network device (120).

3. The user equipment of claim 1 or 2, wherein the user equipment is caused to:
in accordance with a determination that the user equipment is allowed to perform the emergency access in the cell, determine the cell to be an acceptable cell.

4. The user equipment of any of claims 1 to 3, wherein the presence of the indication depends on information that the cell is inaccessible to the user equipment.

5. The user equipment of any of claims 1 to 4, wherein the user equipment is caused to:
perform one of the following based on the determining:
performing (240-1) the emergency access in the cell, or
preventing (240-2) the emergency access in the cell.

6. The user equipment of any of claims 1 to 5, wherein the indication indicates that the emergency access is allowed for a device with 1Rx branch.

7. The user equipment of any of claims 1 to 6, wherein the indication indicates that emergency access is allowed for a device with 2 Rx branches.

8. A method for a user equipment (110), comprising:
in accordance with a determination that an access to a cell by a the user equipment is barred, monitoring (220) an indication related to an emergency access in the cell, wherein the user equipment is barred from making a non-emergency access in the cell based on the user equipment being a release 17 RedCap user equipment with 1 receiving (Rx) branch or 2 Rx branches;
in accordance with a determination that the indication related to the emergency access is received and that the indication indicates that the emergency access is allowed, determining (230) whether the user equipment is allowed to perform emergency access in the cell; and
in accordance with a determination that no indication related to the emergency access is received, determine that the user equipment is disallowed to perform the emergency access in the cell, and in accordance with a determination that the user equipment is to initiate an emergency access, selecting a target cell for the emergency access from at least one candidate cell, wherein each of the at least one candidate cell is accessible to the user equipment.

## Patentansprüche

1. Nutzergerät (110), umfassend:
mindestens einen Prozessor (510); und
mindestens einen Speicher (520), der Anweisungen (530) speichert, die, wenn sie von dem mindestens einen Prozessor ausgeführt werden, das Nutzergerät zumindest veranlassen:
entsprechend einer Feststellung, dass ein Zugang zu einer Zelle durch das Nutzergerät gesperrt ist, eine Angabe (220) in Bezug auf einen Notzugang in der Zelle zu überwachen, wobei das Nutzergerät daran gehindert ist, einen Nicht-Notzugang in der Zelle vorzunehmen, da das Nutzergerät ein Release-17-RedCap-Nutzergerät mit 1 Empfangszweig, Rx, oder 2 Rx-Zweigen ist:
entsprechend einer Feststellung, dass die Angabe in Bezug auf den Notzugang empfangen wird und dass die Angabe anzeigt, dass der Notzugang erlaubt ist, zu bestimmen (230), ob das Nutzergerät berechtigt ist, einen Notzugang in der Zelle vorzunehmen;
entsprechend einer Feststellung, dass keine Angabe in Bezug auf den Notzugang empfangen wird, zu bestimmen, dass das Nutzergerät nicht berechtigt ist, den Notzugang in der Zelle vorzunehmen, und entsprechend einer Feststellung, dass das Nutzergerät einen Notzugang einleiten soll, eine Zielzelle für den Notzugang aus mindestens einer Kandidatenzelle auszuwählen, wobei jede der mindestens einen Kandidatenzelle für das Nutzergerät zugänglich ist.

2. Nutzergerät nach Anspruch 1, wobei die Angabe in Systeminformationen enthalten ist, die von einem Netzwerkgerät (120) ausgestrahlt werden.

3. Nutzergerät nach Anspruch 1 oder 2, wobei das Nutzergerät veranlasst wird:
entsprechend einer Feststellung, dass das Nutzergerät berechtigt ist, den Notzugang in der Zelle vorzunehmen, die Zelle als akzeptable Zelle zu bestimmen.

4. Nutzergerät nach einem der Ansprüche 1 bis 3, wobei das Vorhandensein der Angabe von Informationen abhängt, dass die Zelle für das Nutzergerät nicht zugänglich ist.

5. Nutzergerät nach einem der Ansprüche 1 bis 4, wobei das Nutzergerät veranlasst wird:
auf der Grundlage der Feststellung eine der folgenden Maßnahmen durchzuführen:
den Notzugang in der Zelle durchzuführen (240-1), oder
den Notzugang in der Zelle zu verhindern (240-2).

6. Nutzergerät nach einem der Ansprüche 1 bis 5, wobei die Angabe anzeigt, dass der Notzugang für ein Gerät mit 1 Rx-Zweig erlaubt ist.

7. Nutzergerät nach einem der Ansprüche 1 bis 6, wobei die Angabe anzeigt, dass der Notzugang für ein Gerät mit 2 Rx-Zweigen erlaubt ist.

8. Verfahren für ein Nutzergerät (110), umfassend:
entsprechend einer Feststellung, dass ein Zugang zu einer Zelle durch das Nutzergerät gesperrt ist, Überwachen (220) einer Angabe in Bezug auf einen Notzugang in der Zelle, wobei das Nutzergerät daran gehindert ist, einen Nicht-Notzugang in der Zelle vorzunehmen, da das Nutzergerät ein Release-17-RedCap-Nutzergerät mit 1 Empfangszweig (Rx) oder 2 Rx-Zweigen ist:
entsprechend einer Feststellung, dass die Angabe in Bezug auf den Notzugang empfangen wird und
dass die Angabe anzeigt, dass der Notzugang erlaubt ist, Bestimmen (230), ob das Nutzergerät berechtigt ist, einen Notzugang in der Zelle vorzunehmen; und
entsprechend einer Feststellung, dass keine Angabe in Bezug auf den Notzugang empfangen wird, Bestimmen, dass das Nutzergerät nicht berechtigt ist, den Notzugang in der Zelle vorzunehmen, und entsprechend einer Feststellung, dass das Nutzergerät einen Notzugang einleiten soll, Auswählen einer Zielzelle für den Notzugang aus mindestens einer Kandidatenzelle, wobei jede der mindestens einen Kandidatenzelle für das Nutzergerät zugänglich ist.

## Revendications

1. Un équipement utilisateur (110) comprenant :
au moins un processeur (510) ; et
au moins une mémoire (520) stockant des instructions (530) qui, lorsqu'elles sont exécutées par l'au moins un processeur, amènent l'équipement utilisateur au moins à :
conformément à une détermination selon laquelle un accès à une cellule par l'équipement utilisateur est bloqué, surveiller (220) une indication relative à un accès d'urgence dans la cellule, l'équipement utilisateur étant bloqué pour effectuer un accès non urgent dans la cellule en raison du fait que l'équipement utilisateur est un équipement utilisateur RedCap release 17 avec 1 branche de réception, Rx, ou 2 branches Rx :
conformément à une détermination selon laquelle l'indication relative à l'accès d'urgence est reçue et que l'indication indique que l'accès d'urgence est autorisé, déterminer (230) si l'équipement utilisateur est autorisé à effectuer un accès d'urgence dans la cellule ;
conformément à une détermination selon laquelle aucune indication relative à l'accès d'urgence n'est reçue, déterminer que l'équipement utilisateur n'est pas autorisé à effectuer l'accès d'urgence dans la cellule, et conformément à une détermination selon laquelle l'équipement utilisateur doit initier un accès d'urgence, sélectionner une cellule cible pour l'accès d'urgence parmi au moins une cellule candidate, chaque cellule de l'au moins une cellule candidate étant accessible à l'équipement utilisateur.

2. L'équipement utilisateur de la revendication 1, dans lequel l'indication est comprise dans des informations système qui sont diffusées par un dispositif réseau (120).

3. L'équipement utilisateur de la revendication 1 ou 2, dans lequel l'équipement utilisateur est amené à :
conformément à une détermination selon laquelle l'équipement utilisateur est autorisé à effectuer l'accès d'urgence dans la cellule, déterminer que la cellule est une cellule acceptable.

4. L'équipement utilisateur de l'une quelconque des revendications 1 à 3, dans lequel la présence de l'indication dépend d'informations selon lesquelles la cellule est inaccessible à l'équipement utilisateur.

5. L'équipement utilisateur de l'une quelconque des revendications 1 à 4, dans lequel l'équipement utilisateur est amené à :
effectuer l'une des opérations suivantes sur la base de la détermination :
effectuer (240-1) l'accès d'urgence dans la cellule, ou
empêcher (240-2) l'accès d'urgence dans la cellule.

6. L'équipement utilisateur de l'une quelconque des revendications 1 à 5, dans lequel l'indication indique que l'accès d'urgence est autorisé pour un dispositif avec 1 branche Rx.

7. L'équipement utilisateur de l'une quelconque des revendications 1 à 6, dans lequel l'indication indique que l'accès d'urgence est autorisé pour un dispositif avec 2 branches Rx.

8. Un procédé pour un équipement utilisateur (110), comprenant :
conformément à une détermination selon laquelle un accès à une cellule par l'équipement utilisateur est bloqué, surveiller (220) une indication relative à un accès d'urgence dans la cellule, l'équipement utilisateur étant bloqué pour effectuer un accès non urgent dans la cellule en raison du fait que l'équipement utilisateur est un équipement utilisateur RedCap release 17 avec 1 branche de réception (Rx) ou 2 branches Rx :
conformément à une détermination selon laquelle l'indication relative à l'accès d'urgence est reçue et que l'indication indique que l'accès d'urgence est autorisé, déterminer (230) si l'équipement utilisateur est autorisé à effectuer un accès d'urgence dans la cellule ; et
conformément à une détermination selon laquelle aucune indication relative à l'accès d'urgence n'est reçue, déterminer que l'équipement utilisateur n'est pas autorisé à effectuer l'accès d'urgence dans la cellule, et conformément à une détermination selon laquelle l'équipement utilisateur doit initier un accès d'urgence, sélectionner une cellule cible pour l'accès d'urgence parmi au moins une cellule candidate, chaque cellule de l'au moins une cellule candidate étant accessible à l'équipement utilisateur.
